# EUROPÄISCHE PATENTSCHRIFT

(11) **EP 0 801 525 B1**
(45) Veröffentlichungstag und Bekanntmachung des Hinweises auf die Patenterteilung: **04.08.1999**
(21) Anmeldenummer: 95943189.1
(22) Anmeldetag: 22.12.1995
(51) Int. Cl.: A01N 37/38, C04B 41/46

(54) **DURCHWURZELUNGSINHIBITOREN**
ROOTING INHIBITOR
INHIBITEURS D'ANCRAGE ET DE PROLIFERATION DE RACINES

(30) Priorität: 04.01.1995 DE 19500123
(43) Veröffentlichungstag der Anmeldung: 22.10.1997
(73) Patentinhaber: BAYER AG, 51368 Leverkusen (DE)
(72) Erfinder: HEUER, Lutz, D-47800 Krefeld (DE); ROTHER, Heinz-Joachim, D-47803 Krefeld (DE)
(86) Internationale Anmeldenummer: EP9505096
(87) Internationale Veröffentlichungsnummer: WO9620597

(56) Entgegenhaltungen:
- DE-A- 1 570 087
- DE-B- 1 108 833
- GB-A- 1 041 982
- NL-C- 138 331
- US-A- 3 231 398

## Beschreibung

Die vorliegende Erfindung betrifft die Verwendung von 2-Methyl-4-chlorphenoxypropionsäureamide zum Schutz von Bauwerken, Baustoffen und Isoliermassen gegen Ein- und Durchwachsen von Wurzeln, wurzelfeste Bitumen-Mischungen, Dichtstoffe und Isolierungen sowie Antifouling-Ausrüstung.

Bei Baustoffen führt Wurzeldurchwuchs zu unerwünschten Materialschäden. Besonders plastische Materialien, wie Dichtungsmassen, Dachbahnen, aber auch Asphalt können von Pflanzenwurzeln zerstört werden. Das Eindringen von Wurzeln in Dichtungen von Kanälen und Abwasserleitungen, in Flachdachabdeckungen, in Bitumenisolierungen von Rohrleitungen, Brücken- und Wasserbauten sowie das Ein- und Durchwachsen von Wurzeln bei leichten Bitumen-Straßen sind allgemein bekannte Probleme. Undichtigkeiten, Korrosion, Schäden an Gebäuden, Straßen und Rohrleitungen können die Folge sein.

Der Zusatz von wurzelwidrigen Wirkstoffen zu Baustoffen ist bekannt und z.B. in F. Hegemann, Abiogene Bitumenadditive, Bitumen-Teere-Asphalte-Peche 24, 105 (1973) beschrieben.

Des weiteren ist bekannt, daß Herbizide wie z.B. 2,4-Dichlorphenoxyessigsäure, 2,4,5-Trichlorphenoxyessigsäure und α-Naphthylessigsäure bzw. deren Salze, Amide oder Ester, z.B. Isooctylester oder Ester des 1-Hydroxy-2-butoxyethans, ferner Phenyl-N-isopropylcarbaminat und p-Chlorphenyldimethylharnstoff als Durchwurzelungsinhibitoren genutzt werden können (DE 1 108 833).

Auch sind Gemische von Kondensationsprodukten von Monochloressigsäure mit verschiedenen o-Chlorphenolen oder o-Chlorkresolen beschrieben, die diese Eigenschaften haben sollen (s. DE 1 109 294).

Schließlich ist bekannt, daß Amide von Di- und Polyaminen mit MCPP-Säure (2-Methyl-4-chlorphenoxypropionsäure) eine wurzelhemmende Wirkung haben (DE 1 196 115).

Es wurde nun überraschend gefunden, daß Amide der MCPP-Säure, die aus den Monoaminen der allgemeinen Formel (I) 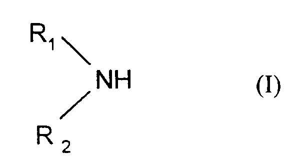 abgeleitet werden, in welche R¹, R², gleich oder verschieden sind und für Wasserstoff oder geradkettiges C₁-C₃₀ Alkyl, dessen verzweigten oder cyclischen Isomeren oder Phenyl stehen, eine sehr gute Wirkung als Durchwurzelungsinhibitoren haben.

Bevorzugt sind MCPP-Säureamide in denen
- R¹: für Me, Et, Pr, ⁱPr, ^{n,i,s,t}-But, ^{n,i,neo,t}-Pentyl, cyclo-Pentyl, cyclo-Hexyl, cyclo-Octyl, ⁿ-Hexyl, ⁿ-Heptyl, ⁿ-Octyl, 2-Ethylhexyl, ⁿ-Nonyl, ⁿ-Decyl, ⁿ-Undecyl, ⁿ-Dodecyl, cyclo-Decyl, ⁿ-Tetradecyl, ⁿ-Tridecyl, ⁿ-Pentadecyl, ⁿ-Pentadecyl, ⁿ-Hexadecyl, ⁿ-Heptadecyl, ⁿ-Octadecyl, ⁿ-Nonadecyl, ⁿ-Eicosyl, ⁿ-C₂₂, ⁿ-C₂₄ oder ihren verzweigten Strukturisomere, oder für durch C₁-C₁₀, Cl, Br, OH oder OMe substituiertes Phenyl oder Benzyl steht und
- R²: für H oder für Me, Et, Pr, ⁱPr, ^{n,i,s,t}-But, ^{n,i,neo,t}-Pentyl, cyclo-Pentyl, cyclo-Hexyl, cyclo-Octyl, ⁿ-Hexyl, ⁿ-Heptyl, ⁿ-Octyl, 2-Ethylhexyl, ⁿ-Nonyl, ⁿ-Decyl, ⁿ-Undecyl, ⁿ-Dodecyl, cyclo-dodecyl, ⁿ-Tetradecyl, ⁿ-Tridecyl, ⁿ-Pentadecyl, ⁿ-Pentadecyl, ⁿ-Hexadecyl, ⁿ-Heptadecyl, ⁿ-Octadecyl, ⁿ-Nonadecyl, ⁿ-Eicosyl, ⁿ-C₂₂, ⁿ-C₂₄ oder ihren verzweigten Strukturisomere, oder für durch C₁-C₁₀, Cl, Br, OH oder OMe substituiertes Benzyl oder Phenyl steht oder
- R¹, R²: aus Aminen stammen, die sich aus nachwachsenden Rohstoffen herleiten und damit eine natürliche Isomeren- und Kettenlängenverteilung aufweisen, wie z.B. Fettamine, Kokusfettamin, Stearylamin, Oleylamin, Dehydroabietylamin, Talgfettamin, Octylamin, Dodecylamin, Tetradeylamin, Hexadeylamin, Octadecylamin, Distearylamin, Dicocosamin, Ditalgamin und ihre Mischungen.

Bei den verzweigten Strukturisomeren sind auch solche Alkylreste bevorzugt, die mittels der Grubert-Reaktion hergestellt werden können, wie z.B. 2-Hexyldecanol (Isofol 16), 2-Butyloctanol (Isofol 12), 2-Decyltetradecanol (Isofol 24), 2-Octyldodecanol (Isofo 20) sowie andere Isofole (Firma Condea, Brunsbüttel) von 10 bis 30 oder deren Gemische, die in einem nachgeschalteten Reaktionsschritt Aminir werden.

Besonders bevorzugt unter diesen Amiden sind solche der Amine der Formel (I) in welcher
- R¹: für ⁿ-Decyl, ⁿ-Dodecyl, ⁿ-Tridecyl-, ⁿ-Tetradecyl- oder ihren verzweigten Strukturisomeren und
- R²: für H steht
oder die oben genannte Amide, die sich aus Nachwachsenden Rohstoffen z.B. Kokesfettamin herleiten.

Erfindungsgemäß finden alle MCPP-Säureamid-Isomere und racemische sowie optisch aktive MCPP-Säureamide Verwendung. Die Amide können einzeln oder in Kombination miteinander verwendet werden. Zur wurzelfesten Ausrüstung werden die Amide dabei direkt in Form von Lösungen oder sonstigen Zubereitungen wie z.B. mit Bitumen, Teerpechen den Baustoffen oder Isolierungsmassen vermischt. Dichtmassen werden beispielhaft und vorzugsweise z.B. in der WO 92/10537 beschrieben. Dies gilt auch für Bitumenemulsionen, in denen die beanspruchten Amide vorzugsweise eingesetzt werden. Ähnliches gilt auch für entsprechende Amide, abgeleitet von 2,4-Dichlorphenoxyessigsäure.

Die üblichen Einsatzkonzentrationen der MCPP-Säureamide liegen bei 0,2 bis 5 Gew.-%, auf Bitumen bezogen.

Die Amide sind nach bekannten Methoden herstellbar (s. z.B. Organikum, Deutscher Verlag der Wissenschaften 1990) und in der Regel durch Destillation, Rektifikation, Kristallisation, Zonenschmelzen oder Kugelrohrdestillation rein zu erhalten. Können die Amide nicht mehr destilliert werden, sind sie durch Chromatographie an Kieselgel zu reinigen. Die reinen Amide enthalten weniger als 0,8 % MCPP-Säure, technische Qualitäten weniger als 2 % MCPP-Säure.

Die folgenden Amide wurden nach DIN 4062 auf ihre Schutzwirkung gegen Durchwurzelung geprüft. Auch wurde ihr Leaching-Verhalten aus Bitumen studiert. Letzteres gibt Auskunft über den Zeitraum, über den die Verbindung in Bitumen aktiv vorhanden ist (Test: 0,8 % Wirkstoff a.i., bez. auf Bitumengewicht, 280 cm² Kontaktfläche, 1 l Wasser, 25°C, Wasserwechsel alle 4 Wochen, analysiert wird MCPP-Säure in mg/l).

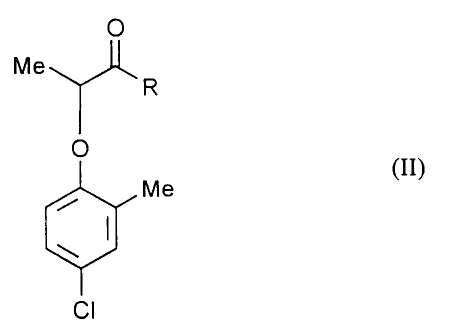

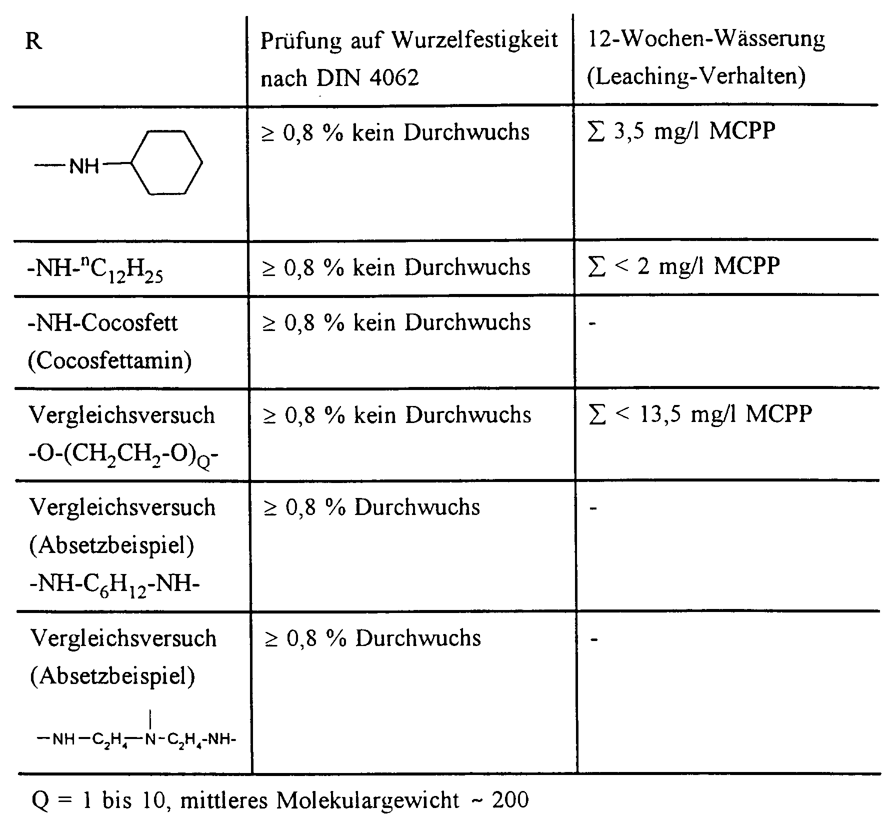

Somit sind nach DIN 4062 Amide aus Monoaminen der Formel (I) den Di- und Triamiden deutlich überlegen, stehen aber den Estern von Polyalkoholen in ihrer Wirkung um nichts nach, und sind aufgrund ihrer chemisch physikalischen Eigenschaften im Gegensatz zu den Polyglykoldiol-diestern technisch leichter zu handhaben. Da die beanspruchten Amide zudem in Bezug auf ihr Molekulargewicht weniger MCPP-Säure als die Diester enthalten, sind sie diesen in ihrer Wirkung pro Säuregruppe überlegen. Diese Überlegenheit drückt sich auch deutlich in der gefunden freien MCPP-Saure im Leaching-Test aus.

## Patentansprüche

1. Verwendung von Verbindungen der Formel (II) 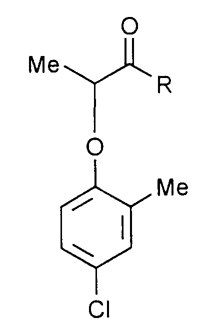 worin R für Reste steht, die aus den Monomeren der allgemeinen Formel (I) 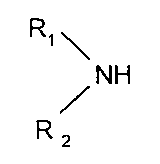 abgeleitet werden, wobei R¹ und R² gleich oder verschieden sind und für Wasserstoff oder geradkettiges, verzweigtes oder cyclischen Alkyl mit 1 bis 30 Kohlenstoffatomen steht, zum Schutz von Bauwerken, Baustoffen und Isoliermassen gegen Ein- und Durchwachsen von Wurzeln.

2. Baustoffe und Isoliermassen enthaltend mindestens eine Verbindung der Formel (II) nach Anspruch 1.

3. Bitumenhaltige Stoffe enthaltend mindestens eine Verbindung der Formel (II) nach Anspruch 1.

4. Verfahren zum Schützen von Bauwerken, Baustoffen und Isolierungen gegen Ein- und/oder Durchwachsen von Wurzeln, dadurch gekennzeichnet, daß man die Bauwerke, Baustoffe bzw. Isolierungen mit Verbindungen der Formel (II) nach Anspruch versetzt bzw. behandelt.

## Claims

1. Use of compounds of the formula (II) 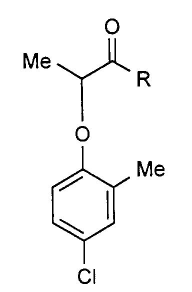 where R represents radicals derived from monomers of the general formula (I) 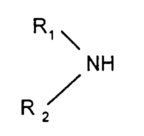 R¹ and R² being identical or different and representing hydrogen or straightchain, branched or cyclic alkyl having 1 to 30 carbon atoms, for protecting buildings, building materials and insulation compounds against the penetration of roots into and through them.

2. Building materials and insulation compounds comprising at least one compound of the formula (II) according to Claim 1.

3. Bitumen-containing substances comprising at least one compound of the formula (II) according to Claim 1.

4. Method of protecting buildings, building materials and insulations against the penetration of roots into and through them, characterized in that the buildings, building materials or insulations are treated with, or exposed to, compounds of the formula (II) according to Claim 1.

## Revendications

1. Utilisation de composés répondant à la formule (II) 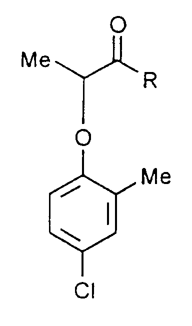 dans laquelle R représente des radicaux qui dérivent des monomères répondant à la formule générale (I) 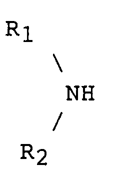 dans laquelle R₁ et R₂ sont identiques ou différents et représentent un atome d'hydrogène ou un groupe alkyle à chaîne droite, à chaîne ramifiée ou cyclique, contenant de 1 à 30 atomes de carbone, pour la protection de chantiers, de matériaux de construction et de matériaux isolants contre l'envahissement de plantes en y empêchant leur prise de racine et leur croissance.

2. Matériaux de construction et matériaux isolants contenant au moins un composé répondant à la formule (II) selon la revendication 1.

3. Substances bitumineuses contenant au moins un composé répondant à la formule (II) selon la revendication 1.

4. Procédé pour protéger des chantiers, des matériaux de construction et des matériaux isolants contre l'envahissement de plantes en y empêchant leur prise de racine et leur croissance, caractérisé en ce qu'on ajoute aux chantiers, aux matériaux de construction, respectivement aux matériaux isolants, des composés répondant à la formule (II) selon la revendication 1, respectivement on les traite avec ces derniers.
